# EUROPÄISCHE PATENTSCHRIFT

(11) **EP 0 813 010 B1**
(45) Veröffentlichungstag und Bekanntmachung des Hinweises auf die Patenterteilung: **03.04.2002**
(21) Anmeldenummer: 96119319.0
(22) Anmeldetag: 03.12.1996
(51) Int. Cl.: F16K 27/02, F16K 31/06

(54) **Kunststoff-Kappe**
Plastic cap
Calotte en matière plastique

(30) Priorität: 15.06.1996 DE 29610544 U
(43) Veröffentlichungstag der Anmeldung: 17.12.1997
(73) Patentinhaber: ROBERT BOSCH GMBH, 70442 Stuttgart (DE)
(72) Erfinder: Schellenberg, Gerhard, 70734 Fellbach (DE); Lorenz, Christian, 73434 Aalen (DE)

(56) Entgegenhaltungen:
- EP-A- 0 404 240
- GB-A- 1 542 592
- US-A- 4 633 898
- US-A- 4 927 287
- US-A- 5 204 498

## Beschreibung

### Stand der Technik

Die Erfindung geht aus von einer Kunststoff-Kappe nach der Gattung des Hauptanspruchs.

Eine Kunststoff-Kappe der hier angesprochenen Art ist bekannt. Sie findet beispielsweise als Deckel für ein Unterdruckdosen-Magnetventil Verwendung. Die Kunststoff-Kappe umfaßt einen Boden und' eine Seitenwand, in der mehrere Durchbrüche entlang ihres Umfangs angeordnet sind. Die Durchbrüche sind beabstandet von einem Rand der Seitenwand angeordnet und vollständig vom Kappenmaterial eingeschlossen, so daß sich geschlossene Fenster ergeben. Der Rand der Seitenwand bildet mit der benachbarten 'Seitenfläche beziehungsweise dem Seitenrand des Durchbruchs einen geschlossenen Haltesteg aus, an dem ein an einem Gehäuseteil des Magnetventils angeordnetes Rastelement eingreift, wodurch die Kunststoff-Kappe an dem Gehäuseteil fixiert und gehalten ist. Das Rastelement ist nasenartig ausgebildet und weist parallel in einem Abstand zueinander angeordnete Eingriffsflächen auf, die mit zwei Seiten des Durchbruchs zusammenwirken. Der Abstand der beiden Eingriffsflächen voneinander ist größer als der Abstand der zwei Seiten des Durchbruchs, so daß bei einem Aufstecken der Kunststoff-Kappe auf das Gehäuseteil die Nase des Rastelements in den die kleineren Abmaße aufweisenden Durchbruch eingreift, wodurch der relativ schmale Haltesteg durch die auftretenden Kräfte, das heißt durch die auf ihn wirkende Flächenpressung, federnd nach außen in Richtung des Rands der Seitenwand gedrängt wird. Es hat sich herausgestellt, daß zur Montage der Kunststoff-Kappe erhebliche Kräfte aufgebracht werden müssen, damit das Rastelement in den Durchbruch der Kunststoff-Kappe einrastet, wobei oftmals eine Arretierung sämtlicher Rastelemente in den jeweiligen Durchbrüchen nicht sichergestellt ist. Weiterhin hat sich gezeigt, daß der Haltesteg der in einem Gießverfahren hergestellten Kunststoff-Kappe den bei der Montage, insbesondere der ersten Montage, auftretenden Kräften während des Einrastens des Rastelements nicht standhält und bricht. Durch das Brechen eines der Haltestege muß die Kunststoff-Kappe ersetzt werden, was zu einer hohen Ausschußrate führt.

### Vorteile der Erfindung

Die erfindungsgemäße Kunststoff-Kappe mit dem kennzeichnenden Merkmal des Hauptanspruchs hat demgegenüber den Vorteil, daß zur Montage sehr geringe Kräfte aufgewendet werden müssen und die Belastung der Kunststoff-Kappe, insbesondere des Haltestegs, erheblich verringert ist, so daß eine Beschädigung der Kunststoff-Kappe praktisch ausgeschlossen werden kann. Dadurch, daß der Haltesteg eine Unterbrechung aufweist, wird die Steifigkeit des Haltestegs in bestimmten Bereichen gezielt herabgesetzt, wodurch ein bei einem Eingreifen eines nasenartigen Rastnockens in den Rastdurchbruch federndes Ausweichen des geteilten Haltestegs leicht möglich ist. Durch die Teilung des Haltestegs werden zwei Tragarme ausgebildet, an denen sich der Rastnocken abstützt. Die Unterbrechung in dem Haltesteg kann schlitzförmig ausgebildet und während oder nach der Herstellung des Kunststoff-Kappe in diese eingebracht werden. Den Tragarmen ist durch den zwischen ihnen liegenden Freiraum die Möglichkeit gegeben, bei Einrasten des Rastnockens in den Rastdurchbruch in Richtung des Seitenwandrands federnd auszuweichen. Der Rastnocken wird in dem Rastdurchbruch deshalb in seiner Arretier-Position gehalten, weil die federelastischen Tragarme den Rastnocken mit einer Rückstellkraft beaufschlagen und diesen in den Rastdurchbruch klemmen beziehungsweise einspannen. Durch die Teilung des Haltestegs unter Ausbildung eines Freiraums ist die Ausschußrate der Kunststoff-Kappen durch gebrochene Haltestege erheblich reduziert. Durch die geschlitzten, fensterartig ausgebildeten Rastdurchbrüche ergibt sich ein besonders betriebs- und fertigungssicheres Verbinden der Kunststoff-Kappe mit einem Gehäuseteil, in dem die Rastnocken angeordnet sind.

Bevorzugt wird eine Ausführungsform der Kunststoff-Kappe, die sich dadurch auszeichnet, daß die Unterbrechung etwa mittig zur Umfangserstreckung des zugehörigen Rastdurchbruchs liegt. Durch die zentrale Positionierung der Unterbrechung werden zwei in etwa gleichlange Tragarme ausgebildet, die aufgrund der Materialeigenschaften des Kunststoffs bei Belastung ausweichen und bei Entlastung selbsttätig zurückfedern können. Dadurch, daß die Tragarme in etwa gleichlang sind, ergibt sich praktisch eine identische Belastung und Auslenkung der beiden Tragarme sowie gleichgroße Rückstellkräfte, wodurch der sich in den Ecken der Tragarme abstützende Rastnocken sicher im Rastdurchbruch gehalten ist.

Besonders bevorzugt wird eine Ausführungsform der Kunststoff-Kappe, bei der die Kappe im KunststoffSpritzverfahren, vorzugsweise durch bodenseitige Kunststoffzuführung, hergestellt ist. Unter Kunststoff-Spritzverfahren soll allgemein das Kunststoff-Gießen, insbesondere Spritzgießen, Extrudieren und Kunststoff-Pressen, insbesondere Spritzpressen, verstanden werden. Bei der Herstellung der. Kappe wird der flüssige Kunststoff in eine Form im Bereich des Kappenbodens eingespritzt, in der er sich am Boden entlang über die Seitenwand zum Rastdurchbruch verteilt, wobei der Rastdurchbruch von dem Kunststoff links und rechts umflossen wird. Der Kunststoff fließt bis zum Seitenwandrand und schließt von zwei Seiten aus kommend den Rastdurchbruch ein, wodurch der Haltesteg ausgebildet wird. Dadurch, daß der Haltesteg von zwei in etwa der Mitte des Rastdurchbruchs zusammenfließenden Kunststoffströmen gebildet wird, die miteinander verschmelzen, ist' eine fertigungsbedingte Trennstelle mit verminderten Materialeigenschaften gebildet. Die Anordnung der Unterbrechung am Haltesteg wird vorzugsweise so gewählt, daß die auch als Bindenaht bezeichnete Trennstelle zumindest teilweise ausgeschnitten wird, so daß die fertigungsbedingte Schwachstelle der Kunststoff-Kappe keinen nachteiligen Einfluß auf deren Betriebssicherheit ausübt.

Weiterhin wird eine Ausführungsform der Kunststoff-Kappe bevorzugt, bei der mehrere Rastdurchbrüche über den Umfang der Seitenwand verteilt angeordnet sind. Die Rastdurchbrüche sind vorzugsweise im gleichen Winkelabstand zueinander angeordnet, wodurch der Anzahl der Rastdurchbrüche entsprechende Montagepositionen der Kunststoff-Kappe möglich sind. Es wird eine Kunststoff-Kappe bevorzugt, die sechs Rastdurchbrüche aufweist, die im gleichen Winkelabstand und jeweils zwei Rastdurchbrüche einander gegenüberliegend angeordnet sind. Die Anordnung der Rastdurchbrüche über den Umfang der Seitenwand kann auch unregelmäßig sein, das heißt der Abstand von einem Rastdurchbruch zum anderen ist unterschiedlich, wodurch vorzugsweise lediglich eine Montageposition der Kunststoff-Kappe möglich ist. Die Montagesicherheit der Kunststoff-Kappe ist dadurch erhöht.

Bevorzugt wird weiterhin eine Ausführungsform der Kunststoff-Kappe, die sich dadurch auszeichnet, daß jeder Rastdurchbruch mit einem kappeninnenseitig liegenden Rastnocken zusammenwirkt. Der Rastnocken ist verlagerbar, vorzugsweise am Gehäuseteil, ausgebildet und wird von dem Seitenwandrand der Kunststoff-Kappe bei Montage aus seiner Ruhelage gedrängt. Sobald der Rastdurchbruch mit dem Rastnokken in eine Gegenüberlage tritt, greift der federnd ausgebildete Rastnocken .in den Rastdurchbruch ein, wobei der im Rastdurchbruch eingerastete Rastnocken nicht über den Mantel der Seitenwand übersteht. Vorteilhaft ist, daß bei mehreren von jeweils einem Rastnocken gehaltenen Rastdurchbrüchen ein sicheres Halten der Kunststoff-Kappe am Gehäuseteil auch bei relativ hohen Belastungen sichergestellt ist. Eine derartige Kunststoff-Kappe weist eine besonders hohe Betriebssicherheit auf.

Schließlich wird eine Ausführungsform der Kunststoff-Kappe bevorzugt, bei der der Rastnocken eine Auflaufschräge aufweist, an die sich ein Eingriffsglied für den Rastdurchbruch anschließt. Durch die Auflaufschräge wird das Verdrängen des Rastnockens, während der Montage der Kunststoff-Kappe, aus seiner Ruheposition mit einer gleichmäßigen Bewegung realisiert, indem der Seitenwandrand mit der Auflaufschräge in Kontakt tritt und diese mit einer Kraftkomponente beaufschlagt, die den Rastnocken in Richtung der Kappeninnenseite verlagert. Das an die Auflaufschräge angrenzende Eingriffsglied kann als Eingriffsfläche ausgebildet sein, die mit vorzugsweise einem weiteren, parallel in einem Abstand angeordneten Eingriffsglied, insbesondere Eingriffläche, zusammenwirkt. Die Eingriffsflächen treten mit der Innenwandung des Rastdurchbruchs in Eingriff und sichern dadurch einerseits die Kunststoff-Kappe gegen eine Verlagerung und andererseits den Rastnocken gegen ein selbstständiges Lösen.

### Zeichnung

Die Erfindung wird im folgenden anhand der Zeichnung näher erläutert. Es zeigen:
- Figur 1: eine schematische Seitenansicht einer Kunststoff-Kappe;
- Figur 2: eine Schnittansicht .der Kunststoff-Kappe gemäß Figur 1 und
- Figur 3: einen schematischen Ausschnitt eines Gehäuseteils mit montierter Kunststoff-Kappe.

### Beschreibung des Ausführungsbeispiels

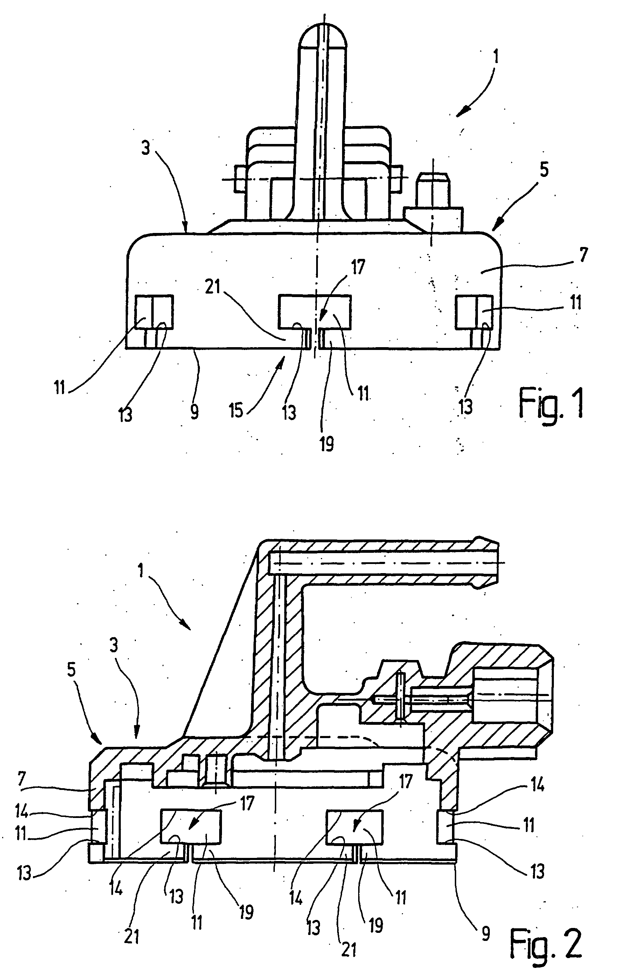

Figur 1 zeigt eine Seitenansicht einer Kunststoff-Kappe 1, die beispielsweise als Deckel für ein hier nicht dargestelltes Unterdruckdosen-Magnetventil dient. Die Kunststoff-Kappe 1 weist einen Boden 3 mit einem kreisförmigen Querschnitt auf. Aus dem Boden 3 entspringt unter Ausbildung einer vorzugsweise als Radius ausgebildeten Kante 5 eine Seitenwand 7, die einen freien, ringförmigen Seitenwandrand 9 aufweist. In.der Seitenwand 7 der topfförmigen Kunststoff-Kappe 1 sind mehrere über den Umfang zueinander und zum Seitenwandrand 9 beabstandet angeordnete Rastdurchbrüche 11 eingebracht. Die Anordnung der einzelnen Rastdurchbrüche bezüglich Formmerkmalen der Kunststoff-Kappe 1, beispielsweise dem Abstand zum Seitenwandrand 9, und die Form und Abmaße der Rastdurchbrüche sind gleich, so daß im folgenden nur von einem einzigen Rastdurchbruch gesprochen wird.

Der auch als Fenster bezeichnete Rastdurchbruch 11 weist hier eine rechteckförmige Kontur auf, wobei die langen Seiten des Rastdurchbruchs 11 in etwa parallel zum ebenen, benachbart angeordneten Seitenwandrand 9 verlaufen. Der Rastdurchbruch 11 weist einen ersten Stützrand 13 auf, der mit dem freien Seitenwandrand 9 der Kunststoff-Kappe einen Haltesteg 15 ausbildet beziehungsweise begrenzt. Ein zweiter Stützrand 14 liegt beabstandet und in etwa parallel zum ersten Stützrand 13 des Rastdurchbruchs. Die Länge des Haltestegs 15 entspricht der Länge des rechteckförmigen Rastdurchbruchs 11. Der Haltesteg 15 weist in etwa seiner Mitte eine Unterbrechung 17 auf, die den Haltesteg 15 in zwei Tragarme 19 und 21 unterteilt.

Die Unterbrechung 17 des Haltestegs 15 liegt in einem Bereich, in dem eine durch im KunststoffSpritzverfahren erzeugte Materialschwachstelle, eine sogenannte Bindenaht, angeordnet ist. Die Bindenaht weist im Gegensatz zur restlichen Seitenwand eine geringere mechanische Belastbarkeit auf. Die Bindenaht wird bei der im Kunststoff-Spritzverfahren hergestellten Kunststoff-Kappe 1 ausgebildet, bei dem der in eine Form eingespritzte, flüssige Kunststoff im Bereich des Bodens 3 sich verteilt und um den Rastdurchbruch 11 herumfließt, so daß der in zwei Teilströme aufgeteilte Kunststoffstrom sich in etwa der Mitte des Haltestegs 15 wieder vereinigt. Die Unterbrechnung 17 ist .vorzugsweise an derselben Stelle angeordnet, an der sich die Bindenaht befindet und weist eine Breite auf, die vorzugsweise größer ist als die Breite der Bindenaht, also dem Bereich mit verschlechterten mechanischen Materialeigenschaften, wodurch die Schwachstelle quasi ausgeschnitten ist. Die Unterbrechung kann während der Herstellung der Kunststoff-Kappe 1 ausgeformt oder nachträglich mit geeigneten Mitteln eingebracht werden, beispielsweise einem Schneidelement. Die Breite der Unterbrechung 17 ist höchstens so groß, daß die dadurch gebildeten Tragarme 19 und 21 des Haltestegs der durch den eingreifenden und sich abstützenden Rastnocken erzeugten Belastung standhalten und nicht beschädigt werden oder abbrechen.

Figur 2 zeigt eine Seitenansicht der Kunststoff-Kappe 1 im Schnitt, wobei die Kunststoff-Kappe 1 bezüglich der Darstellung in Figur 1 im Uhrzeigersinn um 90° gedreht ist. In dieser Darstellung sind vier Rastdurchbrüche 11 sichtbar, die die vom Boden 3 ausgehende Seitenwand 7 durchstoßen. Die beiden Stützränder 13 und 14 des Rastdurchbruchs 11 verlaufen in etwa parallel zum Seitenwandrand 9 und erstrecken sich ungefähr senkrecht zur Oberfläche der Seitenwand 7.

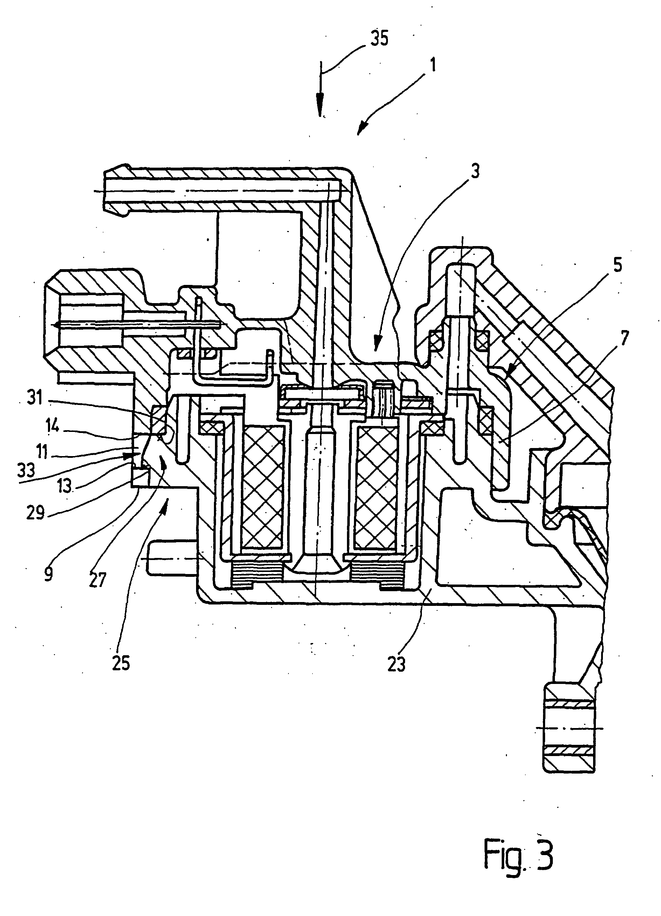

Figur 3 zeigt eine geschnittene Seitenansicht der Kunststoff-Kappe 1, die an einem Gehäuseteil 23 montiert ist. An dem Gehäuseteil 23 ist ein Rastnocken 25 angeordnet, der in diesem Ausführungsbeispiel einstückig mit dem Gehäuseteil 23 ausgebildet ist. Der Rastnocken 25 weist ein nasenförmiges Eingriffselement 27 auf, das von zwei hier als Eingriffsflächen 29 und 31 ausgebildeten Eingriffsgliedern begrenzt ist. Die beiden Eingriffsflächen 29 und 31 sind in etwa parallel zueinander sowie zu den Stützrändern 13 und 14 des Rastdurchbruchs 11 angeordnet und über eine Auflaufschräge 33 miteinander verbunden. Der Abstand der Eingriffsflächen 29 und 31 ist größer als der Abstand der Stützränder 13 und 14, so daß der Rastnocken .bei Eintritt in den Rastdurchbruch unter Spannung gehalten ist.

Die Funktion des federnden Rastnockens 25 wird anhand eines Montagevorgangs der Kunststoff-Kappe 1 näher erläutert:

Die Kunststoff-Kappe 1 wird in Richtung des Pfeils 35 auf das Gehäuseteil 23 aufgesteckt. Dabei tritt der obenliegende zweiten Stützrand 14 des Rastdurchbruchs 11 gegen die Auflaufschräge 33 des Rastnockens 25 und drängt diesen in Richtung der Kappeninnenseite. Im gleichen Moment, in dem der Rastnocken 25 in Gegenüberlage mit dem Rastdurchbruch 11 tritt, federt der Rastnocken 25 in Richtung des Rastdurchbruchs 11 zurück, so daß sich die Eingriffsfläche 29 des Eingriffselements 27 an den ersten Stützrand 13 des Rastdurchbruchs 11 und die Eingriffsfläche 31 des Eingriffselements 27 an den Stützrand 14 des Rastdurchbruchs 11 anlegen. Dadurch, daß der Abstand zwischen den beiden Stützrändern 13 und 14 kleiner ist als der Abstand zwischen den Eingriffsflächen 29 und 31, beaufschlagt der Rastnocken 25 den Rastdurchbruch 11 mit einer auf der Fläche der Stützränder 13 und 14 angreifenden Kraft, wodurch die federnden Tragarme 19 und 21 des geteilten Haltenstegs 15 ausgelenkt werden und den Rastnocken 25 durch ihre Rückstellkraft gegen den Stützrand 14 drängen. Der Rastnocken 25 ist somit zwischen den Stützrändern 13 und 14 eingespannt, wodurch die Kunststoff-Kappe sich am Gehäuseteil 23 gehalten ist. Es ist auch möglich, das Eingriffselement 27 lediglich mit einem Eingriffsglied beziehungsweise -fläche zu versehen, nämlich mit der sich an die Auflaufschräge 33 anschließende Eingriffsfläche 29. Beim Einrasten des Rastnockens, das heißt beim Anlegen der Eingriffsfläche 29 an den von den Tragarmen gebildeten Stützrand 13, wird die Auflaufschräge gegen den Stützrand 14 gedrückt, wodurch der Rastnocken fixiert und gehalten wird.

Durch das Auslenken der Tragarme 19 und 21 bei Eingriff des Rastnockens 25 in den Rastdurchbruch 11 ist die auf die Stützränder 13 und 14 wirkende Flächenpressung relativ gering, wobei die Rückstellkräfte der Tragarme ein Festklemmen des Rastnockens 25 im Rastdurchbruch gewährleistet. Es ist möglich, mehr Rastdurchbrüche als Rastnocken vorzusehen, so daß bei einer alterungsbedingten Reduzierung der Rückstell- und Klemmkraft des Haltestegs beziehungsweise der Tragarme "Reserve-Rastdurchbrüche" zur Verfügung stehen. Die für das Zusammenstecken der Kunststoff-Kappe mit dem Gehäuseteil erforderlichen Montagekräfte sind sehr klein, wodurch die auf die Kunststoff-Kappe wirkenden Kräfte verringert sind. Durch die Unterbrechung des Haltestegs weist die Kunststoff-Kappe aufgrund verminderter Montagekräfte eine hohe Fertigungssicherheit auf.

## Patentansprüche

1. Kunststoff-Kappe mit einem Boden (3) und einer Seitenwand (7), die Rastdurchbrüche (11) aufweist, welche mit Abstand zum freien Seitenwandrand (9) liegen, so daß zwischen dem jeweiligen Rastdurchbruch (11) und freien Seitenwandrand (9) ein beim Rastvorgang ausfedernder Haltesteg (15) ausgebildet ist, **dadurch gekennzeichnet, daß** der Haltesteg (15) eine Unterbrechung (17) aufweist.

2. Kunststoff-Kappe nach Anspruch 1, **dadurch gekennzeichnet, daß** die Unterbrechung (17) etwa mittig zur Umfangserstreckung des zugehörigen Rastdurchbruchs (11) liegt.

3. Kunststoff-Kappe nach Anspruch 1 oder 2, **dadurch gekennzeichnet, daß** die Kappe (1) im Kunststoff-Spritzverfahren, vorzugsweise durch bodenseitige Kunststoffzuführung hergestellt ist.

4. Kunststoff-Kappe nach einem der vorhergehenden Ansprüche, **dadurch gekennzeichnet, daß** mehrere Rastdurchbrüche (11) über den Umfang der Seitenwand (7) verteilt angeordnet sind.

5. Kunststoff-Kappe nach einem der vorhergehenden Ansprüche, **dadurch gekennzeichnet, daß** jeder Rastdurchbruch (11) mit einem kappeninnenseitig liegendem Rastnocken (25) zusammenwirkt.

6. Kunststoff-Kappe nach einem der vorhergehenden Ansprüche, **dadurch gekennzeichnet, daß** der Rastnokken (25) eine Auflaufschräge (33) aufweist, an die sich ein Eingriffsglied für den Rastdurchbruch (11) anschließt.

## Claims

1. Plastic cap having a bottom (3) and a side wall (7) which has latching apertures (11) which lie at a distance from the free side-wall edge (9), so that a retaining web (15) which rebounds during the latching process is formed between the respective latching aperture (11) and free side-wall edge (9), **characterized in that** the retaining web (15) has an interruption (17).

2. Plastic cap according to Claim 1, **characterized in that** the interruption (17) lies approximately centrally with respect to the circumferential extent of the associated latching aperture (11).

3. Plastic cap according to Claim 1 or 2, **characterized in that** the cap (1) is produced in a plastic-spraying process, preferably by supplying plastic through the bottom side.

4. Plastic cap according to one of the preceding claims, **characterized in that** a plurality of latching apertures (11) are distributed over the circumference of the side wall (7).

5. Plastic cap according to one of the preceding claims, **characterized in that** each latching aperture (11) interacts with a latching projection (25) lying on the inside of the cap.

6. Plastic cap according to one of the preceding claims, **characterized in that** the latching projection (25) has a run-on slope (33) adjoined by an engagement element for the latching aperture (11).

## Revendications

1. Calotte en matière plastique comportant un fond (3) et une paroi latérale (7) et qui présente des ouvertures de blocage (11) situées à une certaine distance du bord libre (9) de la paroi latérale, de sorte qu'entre chaque ouverture de blocage (11) et le bord (9) est formée une barrette de maintien (15) présentant un débattement élastique lors de l'opération de blocage,
**caractérisée en ce que**
la barrette de maintien (15) présente une interruption (17).

2. Calotte selon la revendication 1,
**caractérisée en ce que**
l'interruption (17) se trouve à peu près au milieu de l'étendue périphérique de l'ouverture de blocage (11) correspondante.

3. Calotte selon la revendication 1 ou 2,
**caractérisée en ce que**
la calotte (1) est fabriquée par injection de matière plastique, celle-ci étant de préférence amenée du côté du fond.

4. Calotte selon l'une quelconques des revendications précédentes,
**caractérisée en ce que**
plusieurs ouvertures de blocage (11) sont réparties sur la périphérie de la paroi latérale (7).

5. Calotte selon l'une quelconques des revendications précédentes,
**caractérisée en ce que**
chaque ouverture de blocage (11) coopère avec un saillant de blocage (25) situé du côté de la face interne de la calotte.

6. Calotte selon l'une quelconques des revendications précédentes,
**caractérisée en ce que**
le saillant de blocage (25) présente une pente d'accostage (33) à laquelle fait suite un organe de venue en prise dans l'ouverture de blocage (11).
